Europäisches Patentamt

European Patent Office

Office européen des brevets

(19)

(11) Veröffentlichungsnummer: **0 141 277**
**A1**

## (12) EUROPÄISCHE PATENTANMELDUNG

(21) Anmeldenummer: **84111796.3**

(22) Anmeldetag: **03.10.84**

(51) Int. Cl.⁴: **G 01 F 1/00**
**G 01 F 5/00, G 01 F 15/00**
**G 01 F 15/07, G 01 P 5/00**
**//G01M9/00**

(30) Priorität: **11.10.83 DE 3336911**

(43) Veröffentlichungstag der Anmeldung:
**15.05.85 Patentblatt 85/20**

(84) Benannte Vertragsstaaten:
**AT BE CH DE FR GB IT LI LU NL SE**

(71) Anmelder: **Ferdinand Schad KG**
**Steigstrasse 25-27**
**D-7201 Kolbingen(DE)**

(72) Erfinder: **Kurrle, Hermann**
**Haertlestrasse 19**
**D-7201 Kolbingen(DE)**

(72) Erfinder: **Ruf, Wolfgang**
**Albstrasse 7**
**D-7201 Kolbingen(DE)**

(72) Erfinder: **Zeller, Adelbert**
**Steigstrasse 23**
**D-7201 Kolbingen(DE)**

(74) Vertreter: **Dr.-Ing. Hans Lichti Dipl.-Ing. Heiner Lichti**
**Dipl.-Phys. Dr. Jost Lempert**
**Postfach 41 07 60 Durlacher Strasse 31**
**D-7500 Karlsruhe 41(DE)**

(54) **Vorrichtung zum Messen des Volumenstroms eines Gases in einem Kanal.**

(57) Zur Messung der mittleren Kanalgeschwindigkeit in Gasströmen leitenden Kanälen werden dort Meßsonden als Vorrichtung zum Messen der Kanalgeschwindigkeit eingesetzt. Diese Meßsonden ergeben die nach Anordnung im Kanal, nach einer längeren geraden Strecke oder nach einem Krümmer unterschiedlichste Meßergebnisse bei an sich gleichem Volumenstrom. Es muß daher eine Einstellung oder Abgleichung am Einbauort vorgenommen werden. Eine werksseitige Voreinstellung ist nicht möglich. Zur Ermöglichung einer werksseitigen Voreinstellung wird eine Vorrichtung zum Messen des Volumenstroms eines Gases in einem Kanal mit einer Meßsonde (17) vorgeschlagen, die derart ausgebildet ist, daß eine Mehrzal von im wesentlichen gleich verteilten Sammelrohren (3,6) mit einseitig angeordneten Strömungsaufnahmeöffnungen mit einer kompakten Meßeinheit ein rohrförmiges Gehäuse (11) aufweist; daß an der Eintrittsstelle der Sammelrohre (3,6) ein Strömungsgleichrichter (14) angeordnet ist; daß dem Strömungsgleichrichter eine Düse (16) nachgeschaltet ist; und daß hinter der Düse (16) in der Meßeinheit die Meßsonde (17) angeordnet ist.

FIG.2

EP 0 141 277 A1

PATENTANWÄLTE
DR. ING. HANS LICHTI
DIPL.-ING. HEINER LICHTI
DIPL.-PHYS. DR. RER. NAT. JOST LEMPERT

D-7500 KARLSRUHE 41 (GRÖTZINGEN)
DURLACHER STRASSE 31
TEL.: (07 21) 4 85 11

0141277

7371/84

02. Oktober 1984

Ferdinand Schad KG

D-7201 Kolbingen

_ 1 _

## Vorrichtung zum Messen des Volumenstroms eines Gases in einem Kanal

Die Erfindung betrifft eine Vorrichtung zum Messen des Volumenstroms eines Gases in einem Kanal, mit einer Meßsonde.

In der Klimatechnik werden schon seit langem Volumenstromregler eingesetzt, die unabhängig von einem wechselnden Kanaldruck den Volumenstrom im Kanal konstant halten sollen. Hierbei kann bei einem sogenannten variablen Volumenstromsystem über einen elektrischen oder pneumatischen Stellmotor der Volumenstrom entsprechend der einwirkenden Lasten verändert werden, um hierdurch unabhängig vom Kanaldruck den Volumenstrom im Kanal konstant zu halten. Nachteilig ist bei diesen Volumenstromreglern, daß ein Mindestdifferenzdruck von mehr als 150 Pa notwendig ist, damit eine stabile Regelung erfolgt. Ein weiterer Nachteil besteht in der hohen mechanischen Empfindlichkeit eines solchen Volumenstromreglers: Die Federn- und die Klappenlagerung muß sehr sorgfältig aufeinander abgestimmt werden. Im Vertrieb können die Klappenlager verschmutzen, so daß eine genaue Regelung der Klappen nicht mehr möglich ist. Ein weiterer

Nachteil ergibt sich dadurch, daß sich unweigerlich Staub ablagert und somit ein voreingestelltes Drehmoment im Betrieb Veränderungen unterliegt, was zu Fehlregelungen führt. Zur Vermeidung dieser Nachteile wird nun eine elektrische oder pneumatische Meßsonde vorgesehen, die die Strömungsgeschwindigkeit mißt und über einen Stellmotor und eine Klappe den Volumenstrom regelt. Die Klappe erfordert hierbei keine besonderen Konstruktionen. Es können bewährte, handelsübliche Klappen eingesetzt werden. Die bekannten pneumatischen oder elektrischen Meßsonden sind ebenfalls stabil und zuverlässig herstellbar. Bei den elektrischen Sonden erfolgt die Regelung elektronisch, so daß die Regelung an sich genaue Werte erreicht. Ein Nachteil bei diesen bekannten, als Meßvorrichtung dienenden Sonden besteht darin, daß die bei an sich gleichem Volumenstrom je nach Anbringung in einem Kanal nach einer längeren geraden Strecke oder hinter einem Krümmer unterschiedlichste Meßergebnisse anzeigen. Es kommt also jeweils darauf an, an welchem Ort in einem Kanal sie angeordnet sind, damit die gemessene Geschwindigkeit tatsächlich auch dem geforderten Volumenstrom entspricht. Es wird zwar angestrebt, lange Ausgleichsstrecken vor den Meßvorrichtungen vorzusehen, diese sind aber in der Praxis im allgemeinen überhaupt nicht zu verwirklichen, so daß die Meßvorrichtung je nach Einbauverhältnis entweder hinter einer längeren geraden Ausgleichsstrecke oder unmittelbar hinter einem Krümmer angeordnet werden muß. Die abweichenden Meßanzeigen der für sich recht genauen Meßsonden rühren daher, daß beispielsweise hinter einem Krümmer die eigentliche lineare Strömung durch eine Drallströmung überlagert ist. Die vorgenannten Umstände führen darauf zu, daß eine Voreinstellung oder Abgleichung der Meßvorrichtungen werksseitig nicht möglich ist. Es wird vielmehr versucht, an Ort und Stelle nach Einbau der Sonde individuell eine Einstellung oder Abgleichung vorzunehmen, indem man festzustellen versucht, welcher Meßpunkt einen bestimmten Volumenstrom repräsentiert bzw. bei vorgegebenem Volumenstrom ein der Meßvorrichtung zugeordnetes Potentiometer derart abgleicht, daß der Volumenstrom, der bekannt sein muß, durch die Meßanzeige wiedergegeben wird. Diese individuellen Einstellungen sind zeit- und personalaufwendig, abgesehen davon, daß sie oft nur mangelhaft ausgeführt werden, da am Einbauort weder die notwendigen Prüfeinrichtungen noch ausreichend qualifiziertes Personal zur Verfügung steht. Dies führt dazu, daß trotz für sich genauer Meßsonden bisher oft eine ungenaue Volumenregelung erfolgt.

Der Erfindung liegt daher die Aufgabe zugrunde, eine Vorrichtung der eingangs genannten Art zu schaffen, welche eine werksseitige Einstellung oder Abgleichung ermöglicht und dann an jedem beliebigen Ort in einen Kanal einbaubar ist, ohne daß dies unterschiedliche Meßergebnisse zur Folge hätte.

Erfindungsgemäß wird die genannte Aufgabe durch eine Vorrichtung der eingangs genannten Art gelöst, welche dadurch gekennzeichnet ist, daß eine Mehrzahl von im wesentlichen gleich verteilten Sammelrohren mit einseitig angeordneten Strömungsaufnahmeöffnungen mit einer kompakten Meßeinheit verbunden ist; daß die Meßeinheit ein rohrförmiges Gehäuse aufweist; daß an der Einstrittsstelle der Sammelrohre ein Strömungsgleichrichter angeordnet ist; daß dem Strömungsgleichrichter eine Düe nachgeschaltet ist; und daß hinter der Düse in der Meßeinheit die Meßsonde angeordnet ist. Durch die erfindungsgemäße Meßvorrichtung wird eine Meßgenauigkeit erreicht, daß unabhängig vom Einbauort hinter einem Krümmer oder einer geraden Ausgleichsstrecke in der Größenordnung von ca. 2% liegt, wobei eine solche Abweichung durchaus zu vernachlässigen ist, daß sie im Toleranzbereich des gesamten Volumenstromregelsystems liegt. Die durch die erfindungsgemäße Vorrichtung erzielte hohe Meßgenauigkeit unabhängig vom Einbauort ist insbesondere auch unabhängig von dem Durchmesser der Kanäle, in denen die Meßvorrichtung eingesetzt wird. Es ist daher ohne weiteres möglich, eine werksseitige Voreinstellung vorzunehmen, ohne daß hierzu die individuelle Einbausituation bekannt sein müßte. Die Voreinstellung kann daher serienmäßig vorgenommen werden, eine individuelle Einstellung entfällt. Bei einer werksseitigen Einstellung sind auch die notwendigen technischen und personellen Voraussetzungen gegeben, um die Einstellung mit höchster Präzision vorzunehmen. Die erfindungsgemäße Meßvorrichtung kann dann am Einbauort ohne jegliche Probleme und Berücksichtigung besonderer Verhältnisse eingebaut werden, so wie es die Umstände am Einbauort erfordern, d.h. nach einer geraden Ausgleichsstrecke oder unmittelbar hinter einem Krümmer, ohne daß dies größere Auswirkungen auf die Meßgenauigkeit der erfindungsgemäßen Meßvorrichtung und die Regeleigenschaften einer mit dieser in einem Volumenstromregelsystem verbundenen Regeleinheit hätte. Die in der erfindungsgemäßen Meßvorrichtung angeordnete Meßsonde wird durch die erfindungsgemäße Ausgestaltung immer von turbulenzarmer und drallfreier Luft angeblasen. Die durch die erfindungsgemäße Meßvorrichtung erzielte hohe Meßgenauigkeit wird auch in keiner Weise von hinter Krümmern auftretenden Rückströmungen des Gasflusses beeinträchtigt, wie sie üblicherweise dort vorkommen. Um das Meßergebnis weiterhin zu verbessern, ist gemäß einer bevorzugten Ausgestaltung vorgesehen, daß die Sammelrohre als Mehrkant-, insbesondere als Vierkantrohre ausgebildet sind. Hierdurch ist es möglich die Strömungsaufnahmeöffnungen über ihre gesamte Fläche hin genau senkrecht zur Gasströmung anzuordnen, so daß ein schräges Anströmen mit hierdurch bedingten Verfälschungen erfolgt. Die erfindungsgemäße Vorrichtung sollte mindestens zwei Sammelrohre aufweisen, wobei aber auch je nach Kanalgröße sechs bis acht oder mehr Arme sinnvoll sein können und ohne weiteres bei der erfindungsgemäße Vorrichtung verwirklichbar sind. In bevorzugter Weise ist aber vorgesehen, daß die Vorrichtung vier Sammelrohre aufweist, was für einen weiten Bereich unterschiedlicher Kanaldurchmesser ausreicht, so daß hierin ein optimaler Standard gesehen werden kann. Während auch in den meisten Fällen vorteilhaft ist, daß die Meßeinheit im Zentrum der Sammelrohre angeordnet ist und auf der der Sonde abgewandten Vorderseite durch eine Kappe abgedeckt ist, kann je nach Ausgestaltung der Kanäle, in denen die Vorrichtung eingebaut werden soll und der örtlichen Verhältnisse weiterhin auch vorgesehen sein, daß die Meßsonde über Verbindungsleitungen seitlich der Anordnung der Sammelrohre angeordnet ist, wobei dann vorteilhafterweise eine Vorrichtung eine Ringleitung aufweist, die die Sammelrohre verbindet.

Weitere Vorteile und Merkmale der Erfindung ergeben sich aus den Ansprüchen und aus der nachfolgenden Beschreibung, in der Ausführungsbeispiele der erfindungsgemäßen Vorrichtung im einzelnen erläutert sind. Dabei zeigt:

Fig. 1a    eine Aufsicht auf eine in einen kreisförmigen Kanal eingesetzte Ausführungsform der Erfindung;

Fig. 1b    einen Schnitt durch ein Sammelrohr der Vorrichtung entsprechend B - B der Figur 1a;

Fig. 2    einen Schnitt durch den Zentralteil der in Figur 1 dargestellten Ausführungsform entsprechen A - A;

Fig. 3    eine andere Ausführungsform der erfindungsgemäßen Vorrichtung;

Fig. 4    ein Meßdiagramm mit Messungen der Kanalgeschwindigkeit mit und ohne der erfindungsgemäßen Vorrichtung über den Regelbereich in Fig. 4a, wobei Fig. 4b jeweils die Anordnung der Meßeinrichtungen im Strömungskanal darstellt.

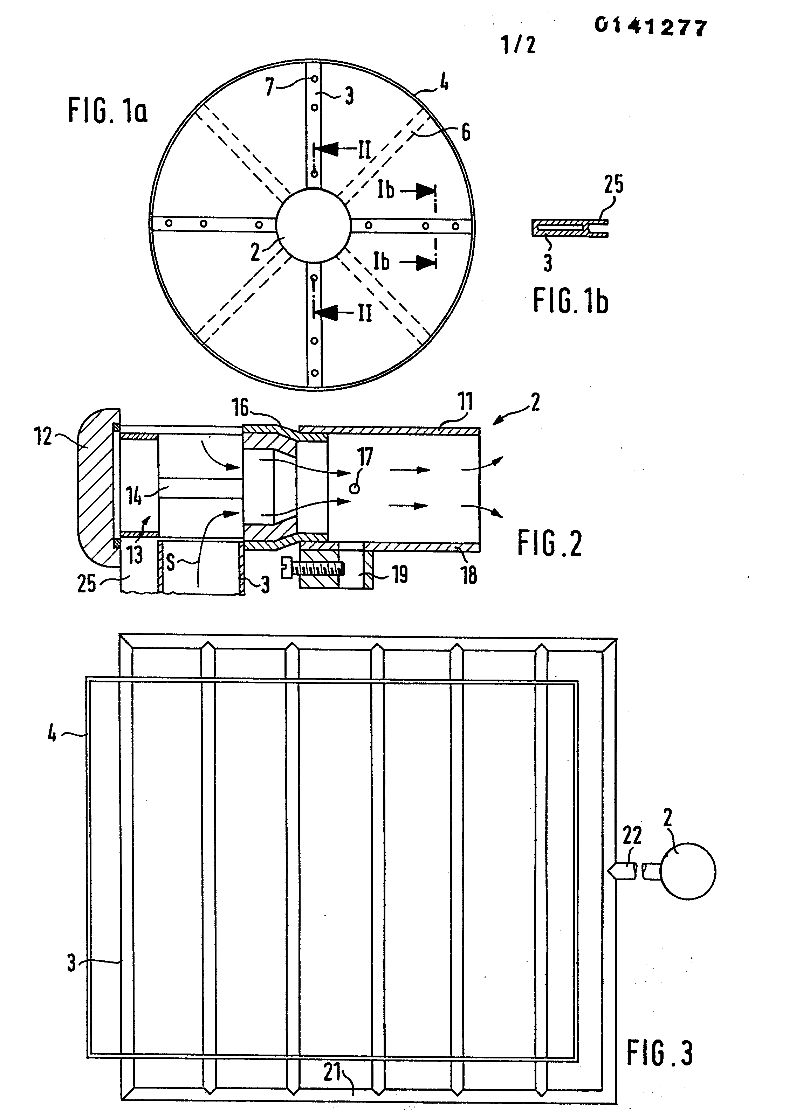

Die erfindungsgemäße Vorrichtung zum Messen des Volumenstroms eines Gases in einen Kanal weist in der in Fig. 1 dargestellten Ausführungsform eine zentrale Meßeinheit 2 auf, von der sich zunächst vier Sammelrohre 3 sternförmig nach außen bis zur Innenwand des gasführenden Kanals 4 erstrecken, in dem die Meßvorrichtung angeordnet ist. Gestrichelt ist dargestellt, daß neben den vier Sammelrohren 3 auch weitere Sammelrohre 6, insgesamt also acht Sammelrohre vorgesehen sein können. Die Anzahl der Sammelrohre 3, 6 hängt wesentlich vom Durchmesser des gasführenden Kanals ab. Die Darstellung der Fig. 1a ist in Anströmrichtung des Gases. In dieser Richtung weisen die Sammelrohre 3 Strömungsaufnahmeöffnungen 7 auf, die radial logarithmisch verteilt sind. Die Sammelrohre 3 sind, wie der Fig. 1b entnehmbar ist, als Vierkantrohre ausgebildet, wobei das Verhältnis der Höhe senkrecht zur Strömungsrichtung zur Breite der Rohre in Strömungsrichtung in der Größenordnung von etwa 1:10 liegt.

Die Sammelrohre 3 weisen, wie insbesondere aus dem Schnitt der Fig. 1b und der Fig. 2 ersichtlich ist sich parallel zur Hauptströmungsrichtung im Rohr erstreckende finnenartige Ansätze auf, die in der Strömung entgegengerichtet sind. Diese Ansätze 25 vor den eigentlichen Sammelrohren 3 dienen dazu, daß keine Verfälschung der Meßergebnisse dadurch eintritt, daß, insbesondere bei Krümmeranströmung der Luftstrom durch eine Drallströmung überlagert ist, wodurch, falls diese Finnen oder Ansätze 25 nicht vorhanden wären, der Meßarm schräg angeströmt würde. Die Finnen oder Ansätze 25 dienen also dazu eine Drehbewegung und Schräganströmung vor den Maßarmen oder Sammelrohren 3 zu vermeiden.

Die zentrale Meßeinheit der erfindungsgemäßen Vorrichtung ist in der Fig. 2 genauer in einem Schnitt entlang A - A, wie er in der Fig. 1 angedeutet ist, dargestellt. Die Meßeinheit 2 ist als rohrförmiges Gehäuse 11 ausgebildet, dessen Achse sich in Strömungsrichtung der in Kanal 4 strömenden Geschwindigkeit und damit senkrecht zu den Sammelrohren 3 erstreckt. Auf der Anströmseite ist die Meßeinheit 2 verschlossen, beispielsweise durch eine Kappe 12. Unmittelbar hinter der Kappe 12 münden die Sammelrohre 3 radial in die Meßeinheit 2. Im Zentrum dieses Einmündungsbereichs 13 ist ein Strömungsgleichrichter 14 in Form von Leitblechen angeordnet. Durch den Strömungsgleichrichter 14 werden die zur Achse des Kanals 4 und der Meßeinheit 2 radial durch die Sammelrohre 3 zugeführten Rohre in axialer Richtung umgelenkt. Hinter dem Strömungsgleichrichter 14 ist eine Düse 16 vorgesehen, die den Strömungsweg des durch die Sammelrohre 3 zugeführten Gasanteils verengt. Unmittelbar hinter der Düse 16 ist eine Meßsonde 17 angeordnet, die lediglich schematisch als Meßpunkt dargestellt ist.

Die Gasströmung S ist durch Pfeile dargestellt. Das Gas strömt am Ende eines über die Meßsonde 17 hinaus verlängerten Rohres 18 aus der Meßeinheit 2 wieder heraus. Die Meßsonde 17 kann beispielsweise durch eine seitliche Öffnung 19 in das Gehäuse 2 eingeführt werden, wobei sie in dieser seitlichen Öffnung 19 festgeklemmt werden kann.

Durch die erfindungsgemäße Meßvorrichtung wird der Gasstrom über den gesamten Querschnitt des Kanals 4 sozusagen probenweise entnommen und gesammelt, in optimaler Weise vergleichsmäßig und sodann mit der Meßsonde 17 gemessen, die damit einen Durchschnittswert der Geschwindigkeit und auch des Volumendurchsatzes den ganzen Kanal 4 mißt. Es wird dabei eine werksseitige Eichung oder Voreinstellung der Meßvorrichtung vorgenommen.

Die Ausführungsform der Figur 1a kann auch in einem Kanal mit rechteckigem Querschnitt vorgesehen sein. Weiterhin ist in der Fig. 3a eine andere Ausführungsform dargestellt, bei der die dortige erfindungsgemäße Vorrichtung im Zusammenhang mit einem im Querschnitt rechteckigen Kanal dargestellt ist, der aber ebenfalls einen kreisförmigen Querschnitt aufweisen könnte. Die Sammelrohre 3 sind bei der Ausführungsform der Figur 3 gitter- oder netzartig angeordnet, wobei sich jedes Rohr 3 über die gesamte Höhe des Kanals erstreckt und an der Ober- und Unterseite aus diesem herausgeführt ist. Über die Breite des Kanals sind mehrere Sammelrohre 3 vorgesehen, die zwar im dargestellten Ausführungsbeispiel gleichen Abstand aufweisen, bei denen der Abstand aber auch in anderer geeigneter Weise, beispielsweise logarithmisch vorgegeben sen könnte. Im Unterschied zu der Ausgestaltung der Figur 1 ist bei der Ausgestaltung der Figur 3 die Meßeinheit 2 nicht im Zentrum des Kanals angeordnet. Die einzelnen Sammelrohre 3 sind vielmehr durch eine Sammelleitung 21 miteinander verbunden, die über ein Verbindungsrohr 22 zur außerhalb des Kanals 4 befindlichen Meßeinheit 2 führen. Das Innere der Meßeinheit 2 entspricht ebenfalls der Figur 2. Auch bei einer sternförmigen Anordnung der Sammelrohre 3 nach der Figur 1a könnte die Meßeinheit 2 außerhalb des Kanals 4 angeordnet sein.

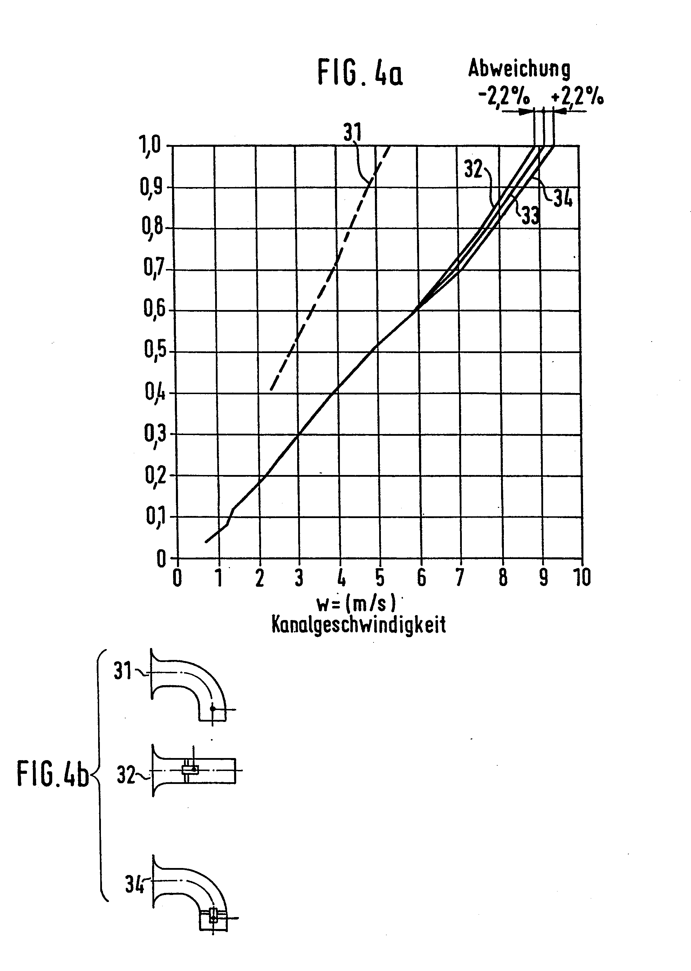

Mit der erfindungsgemäßen Meßvorrichtung wurden - im Vergleich zum konventionellen Vorgehen nach dem Stand der Technik - Messungen vorgenommen, die im Diagramm der Figur 4 dargestellt sind, wobei auf der Abszisse die Kanalgeschwindigkeit und der Ordinate der Regelbereich als der zugehörige Bereich, zwischen dem die entsprechende Volumenstromänderung stattfinden soll, in relativen Werten angegeben ist. Der Ordinatenwert ist also ein relatives Maß für die eingesetzte Energie, hier Spannung, zur Erzeugung der jeweiligen Kanalgeschwindigkeit in der Versuchsanordnung. Die Kurve 32 zeigt die Anordnung einer erfindungsgemäßen Meßvorrichtung in einem geraden Kanal, also bei gerader Anströmung (auch Fig. 4b), während die Kurve 34 die Anströmung einer erfindungsgemäßen Meßvorrichtung über einen Krümmer wiedergibt. Die Kurve 33 ist der aus 32 und 34 gemittelte Wert, entsprechend dem die Eichung oder werksseitige Voreinstellung vorgenommen werden kann. Die beiden extremen Anströmverhältnisse, gerade Anströmung einerseits und Anströmung über einen 90$^{\circ}$-Krümmer andererseits bedingen dann von der werksseitigen Voreinstellung lediglich eine maxiamle Abweichung von 2,2%.

Demgegenüber zeigt die Kurve 31 die Anströmung einer Meßsonde in der konventionellen Weise ohne erfindungsgemäße Meßvorrichtung über einen Krümmer, wobei eine konventionelle Messung einer geraden Anströmung einen Wert etwa im Bereich der Kurven 32 bis 34 ergeben würde. Die Abweichung der Kurve 31 von den anderen Kurven zeigt deutlich, daß hier bei der Voreinstellung auf einen Mittelwert zu große Abweichungen in Kauf genommen werden können bzw. eine werksseitige Voreinstellung nicht möglich ist,sondern die Einstellung jeweils erst nach dem Einbau in Abhängigkeit von den Verhältnissen am Einbauort vorgenommen werden muß.

Die in der vorstehenden Beschreibung, in der Zeichnung sowie in den Ansprüchen offenbarten Merkmale der Erfindung können sowohl einzeln als auch in geeigneten Kombinationen für die Verwirklichung der Erfindung in ihren verschiedenen Ausführungsformen wesentlich sein.

PATENTANWÄLTE

DR. ING. HANS LICHTI
DIPL.-ING. HEINER LICHTI
DIPL.-PHYS. DR. RER. NAT. JOST LEMPERT

**0141277**

D-7500 KARLSRUHE 41 (GRÖTZINGEN)
DURLACHER STRASSE 31
TEL.: (07 21) 4 85 11

_‑1‑_     7371/84

02. Oktober 1984

Ferdinand Schad  KG

D-7201  Kolbingen

PATENTANSPRÜCHE

1.    Vorrichtung zum Messen des Volumenstroms eines Gases in einem Kanal, mit einer Meßsonde, d a d u r c h   g e k e n n z e i c h n e t, daß eine Mehrzahl von im wesentlichen gleich verteilten Sammelrohren (3, 6) mit einseitig angeordneten Strömungsaufnahmeöffnungen  mit einer kompakten Meßeinheit (2) verbunden ist; daß die Meßeinheit ein rohrförmiges Gehäuse (11) aufweist;  daß an der Eintrittsstelle der Sammelrohre (3, 6) ein Strömungsgleichrichter (14) angeordnet ist; daß dem Strömungsgleichrichter eine Düse (16) nachgeschaltet ist; und daß hinter der Düse (16) in der Meßeinheit die Meßsonde (17) angeordnet ist.

2.    Vorrichtung nach Anspruch 1, dadurch gekennzeichnet, daß die Sammelrohre (3, 6) als Mehrkantrohre ausgebildet sind.

3. Vorrichtung nach Anspruch 2, dadurch gekennzeichnet, daß die Sammelrohre (3, 6) als Vierkantrohre ausgebildet sind.

4. Vorrichtung nach Anspruch 1 bis 3, dadurch gekennzeichnet, daß das Verhältnis von senkrecht zur Strömungsrichtung des Gases stehender Höhe zur parallel zum Gasstrom verlaufender Breite der Sammelrohre (4, 6) kleiner als 1:4 ist.

5. Vorrichtung nach einem der Ansprüche 1 bis 4, dadurch gekennzeichnet, daß die Sammelrohre (3, 6) sternförmig angeordnet sind.

6. Vorrichtung nach einem der Ansprüche 1 bis 4, dadurch gekennzeichnet, daß die Sammelrohre (3, 6) gitterförmig angeordnet sind.

7. Vorrichtung nach einem der Ansprüche 1 bis 6, dadurch gekennzeichnet, daß die Meßeinheit (2) im Zentrum der Sammelrohre (3, 6) angeordnet ist und auf der der Sonde abgewandten Vorderseite durch eine Kappe (2) abgedeckt ist.

8. Vorrichtung nach einem der Ansprüche 1 bis 6, dadurch gekennzeichnet, daß die Meßsonde (2) über Verbindungsleitungen (21, 22) seitlich der Anordnung der Sammelrohre (3, 6) angeordnet ist.

9. Vorrichtung nach Anspruch 8, dadurch gekennzeichnet, daß die Verbindungsleitungen (21,22) eine Ringleitung aufweisen.

10. Vorrichtung nach einem der vorangehenden Ansprüche, dadurch gekennzeichnet, daß, insbesondere bei sternförmiger Anordnung, vier Sammelrohre (3) vorgesehen sind.

- 3 -

0141277

11. Vorrichtung nach einem der vorangehenden Ansprüche, dadurch gekennzeichnet, daß die Strömungsaufnahmeöffnungen (7) vom äußeren Ende der Sammelrohre (3, 6) nach innen hin logarithmisch verteilt sind.

12. Vorrichtung nach einem der vorangehenden Ansprüche, dadurch gekennzeichnet, daß der Strömungsgleichrichter (14) die von den Sammelrohren (3, 6) zur Meßeinheit (2) zugeführte Gasströmung umleitende Leitbleche aufweist.

13. Vorrichtung nach einem der vorangehenden Ansprüche, dadurch gekennzeichnet, daß von den Sammelrohren (3, 6) aus im wesentlichen der Hauptgasströmung parallel entgegengerichtet Ansätze (25) vorgesehen sind.

FIG. 1a

FIG.1b

FIG.2

FIG.3

## FIG. 4a

Abweichung

-2,2%   +2,2%

w=(m/s)
Kanalgeschwindigkeit

FIG.4b

31

32

34

Europäisches
Patentamt

**EUROPÄISCHER RECHERCHENBERICHT**

| EINSCHLÄGIGE DOKUMENTE | | | EP 84111796.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B2 - 2 405 787 (BERGWERKSVER-BAND)  * Fig. 1-4; Spalte 3, Zeilen 15-24 * | 1,8 | G 01 F 1/00<br>G 01 F 5/00<br>G 01 F 15/00<br>G 01 F 15/07<br>G 01 P 5/00<br>/G 01 M 9/00 |
| A | DE - A1 - 2 423 297 (VOLKSWAGEN-WERK)  * Seite 3, Absatz 2; Fig. 1 * | 1 | |
| A | DE - A1 - 2 934 137 (NISSAN)  * Seite 5; Fig. * | 1 | |

| RECHERCHIERTE SACHGEBIETE (Int. Cl.4) |
|---|
| G 01 F<br>G 01 P<br>G 01 M |

Der vorliegende Recherchenbericht wurde für alle Patentansprüche erstellt.

| Recherchenort | Abschlußdatum der Recherche | Prüfer |
|---|---|---|
| WIEN | 22-01-1985 | BURGHARDT |